# EUROPEAN PATENT SPECIFICATION

(11) **EP 4 641 338 B1**
(45) Date of publication and mention of the grant of the patent: **11.11.2026**
(21) Application number: 25156495.1
(22) Date of filing: 07.02.2025
(51) Int. Cl.: G05D 1/243, G05D 1/248, G05D 109/30

(54) **SYSTEM FOR AND METHOD OF CONTROLLING WATERCRAFT**
SYSTEM UND VERFAHREN ZUR STEUERUNG VON WASSERFAHRZEUGEN
SYSTÈME ET PROCÉDÉ DE COMMANDE D'EMBARCATION

(30) Priority: 25.04.2024 JP 2024071402
(43) Date of publication of application: 29.10.2025
(73) Proprietor: Yamaha Hatsudoki Kabushiki Kaisha, Iwata-shi, Shizuoka 438-8501 (JP)
(72) Inventor: Inoue, Hiroshi, Iwata-shi, Shizuoka, 4388501 (JP); Okamura, Daisuke, Iwata-shi, Shizuoka, 4388501 (JP); Naito, Katsutoshi, Iwata-shi, Shizuoka, 4388501 (JP); Akahane, Kunihiko, Iwata-shi, Shizuoka, 4388501 (JP); Takase, Hiroaki, Iwata-shi, Shizuoka, 4388501 (JP); Yoshida, Kazumichi, Iwata-shi, Shizuoka, 4388501 (JP); Hirota, Tomohiro, Iwata-shi, Shizuoka, 4388501 (JP)
(74) Representative: Grünecker Patent- und Rechtsanwälte PartG mbB

(56) References cited:
- CN-A- 110 610 134
- DE-A1- 102023 124 703

## Description

The present invention relates to a system for and a method of controlling a watercraft.

There has been conventionally known an automated navigation technology for causing a watercraft to automatically move along a predetermined navigation route. For example, in such an automated navigation technology as described in Japan Laid-open Patent Application Publication No. JP 2022-060044 A, the watercraft includes a satellite positioning sensor for a satellite positioning system such as the GPS (Global Positioning System). The satellite positioning sensor detects the position of the watercraft based on radio waves transmitted from a satellite. A controller for the watercraft causes the watercraft to automatically move along a predetermined navigation route based on the position of the watercraft detected by the satellite positioning sensor. Further examples for automated navigation technologies are described in DE 10 2023 124 703 A1 and CN 110610 134 A.

When the watercraft passes under a building structure such as a bridge, for instance, chances are that the radio waves transmitted from the satellite become temporarily unreceivable by the satellite positioning sensor. In this case, it is made difficult to continue the automated navigation for the watercraft by the technology described above. It is an object of the present invention to continue automated navigation even when radio waves transmitted from a satellite become temporarily unreceivable by a satellite positioning sensor.

This is achieved by the features of the independent claims. Further features and advantages of the present invention are set forth in dependent claims.

FIG. 1 is a perspective view of a watercraft embedded with a system according to an embodiment.
FIG. 2 is a block diagram showing a configuration of the system.
FIG. 3 is a diagram exemplifying navigation routes in automated navigation control.
FIG. 4 is a flowchart showing a series of processing for the automated navigation control.
FIG. 5 is a diagram exemplifying a target object detected by a remote sensor.
FIG. 6 is a diagram exemplifying the navigation route in the automated navigation control.
FIG. 7 is a diagram exemplifying the target object detected by the remote sensor.

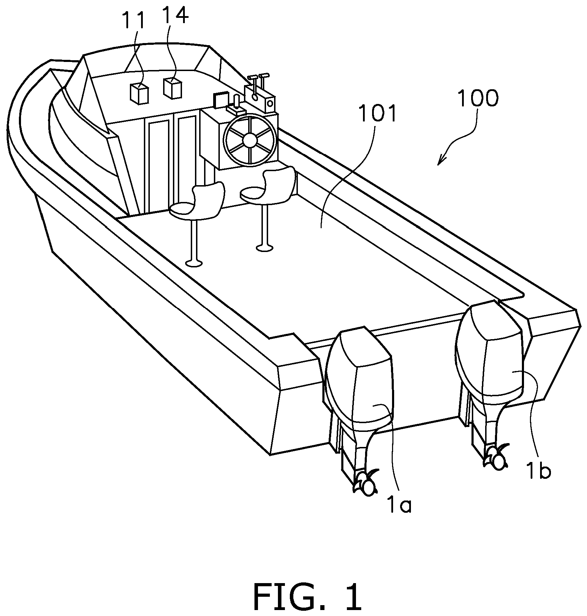

A system for controlling a watercraft according to an embodiment will be hereinafter explained with reference to drawings. FIG. 1 is a perspective view of a watercraft 101 embedded with a system 100 according to the embodiment. The system 100 causes the watercraft 101 to automatically navigate in an unmanned manner. The system 100 includes a first marine propulsion device 1a and a second marine propulsion device 1b. The first and second marine propulsion devices 1a and 1b are outboard motors. The first and second marine propulsion devices 1a and 1b each generate a thrust for propelling the watercraft 101.

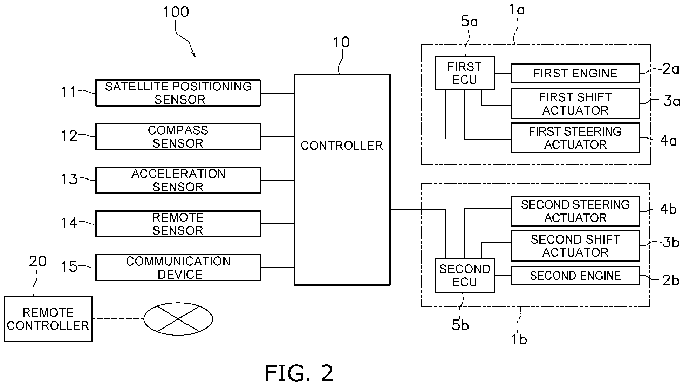

FIG. 2 is a block diagram showing a configuration of the system 100. As shown in FIG. 2, the first marine propulsion device 1a includes a first engine 2a, a first shift actuator 3a, a first steering actuator 4a, and a first ECU (Electronic Control Unit) 5a. The first engine 2a generates the thrust for propelling the watercraft 101.

The first shift actuator 3a is, for instance, an electric motor. The first shift actuator 3a changes the states of clutch engagement in the first marine propulsion device 1a to change the rotational directions of a propeller in the first marine propulsion device 1a. Accordingly, the actions of the watercraft 101 are shifted between forward movement and rearward movement. The first steering actuator 4a is, for instance, an electric motor. The first steering actuator 4a turns right and left the first marine propulsion device 1a. Accordingly, the first marine propulsion device 1a is changed in rudder angle.

The first ECU 5a includes a processor such as a CPU (Central Processing Unit) and memories such as a RAM (Random Access Memory) and a ROM (Read Only Memory). The first ECU 5a has stored programs and data for controlling the first marine propulsion device 1a. The first ECU 5a controls the first engine 2a.

The second marine propulsion device 1b includes a second engine 2b, a second shift actuator 3b, a second steering actuator 4b, and a second ECU 5b. The second engine 2b, the second shift actuator 3b, the second steering actuator 4b, and the second ECU 5b in the second marine propulsion device 1b are configured in comparable manner to the first engine 2a, the first shift actuator 3a, the first steering actuator 4a, and the first ECU 5a in the first marine propulsion device 1a, respectively.

The system 100 includes a satellite positioning sensor 11, a compass sensor 12, an acceleration sensor 13, and a remote sensor 14. The satellite positioning sensor 11 detects the position of the watercraft 101 based on radio waves transmitted from a satellite of a satellite positioning system. The satellite positioning sensor 11 is, for instance, a receiver for a GNSS (Global Navigation Satellite System) such as the GPS (Global Positioning System). However, the satellite positioning sensor 11 may be a sensor other than the GNSS receiver. The satellite positioning sensor 11 outputs a signal indicating the position of the watercraft 101.

The compass sensor 12 detects the heading of the watercraft 101. The compass sensor 12 outputs a signal indicating the heading of the watercraft 101. The acceleration sensor 13 detects the acceleration of the watercraft 101. The acceleration sensor 13 outputs a signal indicating the acceleration of the watercraft 101. The remote sensor 14 detects the position of a target object located in the moving direction of the watercraft 101 with respect to the watercraft 101. The remote sensor 14 is a camera, for instance, and obtains an image in the moving direction of the watercraft 101. The remote sensor 14 outputs a signal indicating the image in the moving direction of the watercraft 101.

The system 100 includes a controller 10. The controller 10 includes a processor such as a CPU and memories such as a RAM and a ROM. The controller 10 has stored programs and data for controlling the first and second marine propulsion devices 1a and 1b. The controller 10 is connected to the first and second ECUs 5a and 5b by wired or wireless communication.

The controller 10 outputs a command signal to each of the first and second ECUs 5a and 5b. The command signal is transmitted to the first engine 2a, the first shift actuator 3a, and the first steering actuator 4a through the first ECU 5a. The command signal is transmitted to the second engine 2b, the second shift actuator 3b, and the second steering actuator 4b through the second ECU 5b.

The controller 10 controls the first and second shift actuators 3a and 3b to shift the actions of the watercraft 101 (forward movement, rearward movement, and stoppage) from one to another. The controller 10 controls the first and second engines 2a and 2b to control the velocity of the watercraft 101. The controller 10 controls the first and second steering actuators 4a and 4b to steer the watercraft 101 right and left.

The controller 10 is connected to the satellite positioning sensor 11, the compass sensor 12, the acceleration sensor 13, and the remote sensor 14 in a communicable manner. The controller 10 obtains the position of the watercraft 101 based on the signal transmitted thereto from the satellite positioning sensor 11. The controller 10 obtains the velocity of the watercraft 101 based on the signal transmitted thereto from the satellite positioning sensor 11. The controller 10 obtains the heading of the watercraft 101 based on the signal transmitted thereto from the compass sensor 12. The controller 10 obtains the acceleration of the watercraft 101 based on the signal transmitted thereto from the acceleration sensor 13. The controller 10 obtains the image in the moving direction of the watercraft 101 based on the signal transmitted thereto from the remote sensor 14.

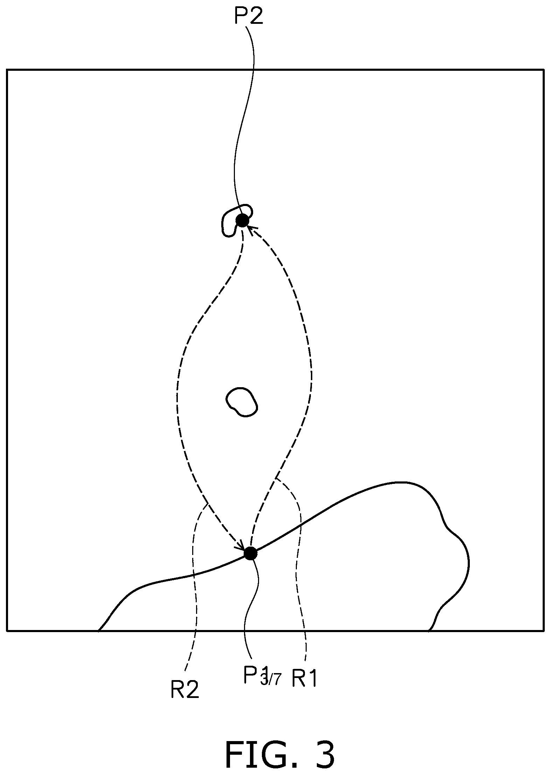

As shown in FIG. 3, the controller 10 causes the watercraft 101 to automatically navigate between a departure point P1 to a destination point P2 in an unmanned manner. The controller 10 has stored automated navigation information including the location of the departure point P1, the location of the destination point P2, and navigation routes R1 and R2 between the departure point P1 and the destination point P2. The controller 10 controls the watercraft 101 to move along the navigation route R1 from the departure point P1 to the destination point P2 based on the sensor information detected by the sensors described above and the automated navigation information. Besides, the controller 10 controls the watercraft 101 to move along the navigation route R2 from the destination point P2 to the departure point P1 based on the sensor information and the automated navigation information.

It should be noted that as shown in FIG. 2, the system 100 includes a communication device 15. The communication device 15 executes data communication with a remote controller 20 over a mobile communication network. The remote controller 20 is disposed in, for instance, a management center remote from the watercraft 101. In the management center, an operator causes the remote controller 20 to transmit a command signal to the controller 10 of the watercraft 101, whereby the watercraft 101 can be remotely operated.

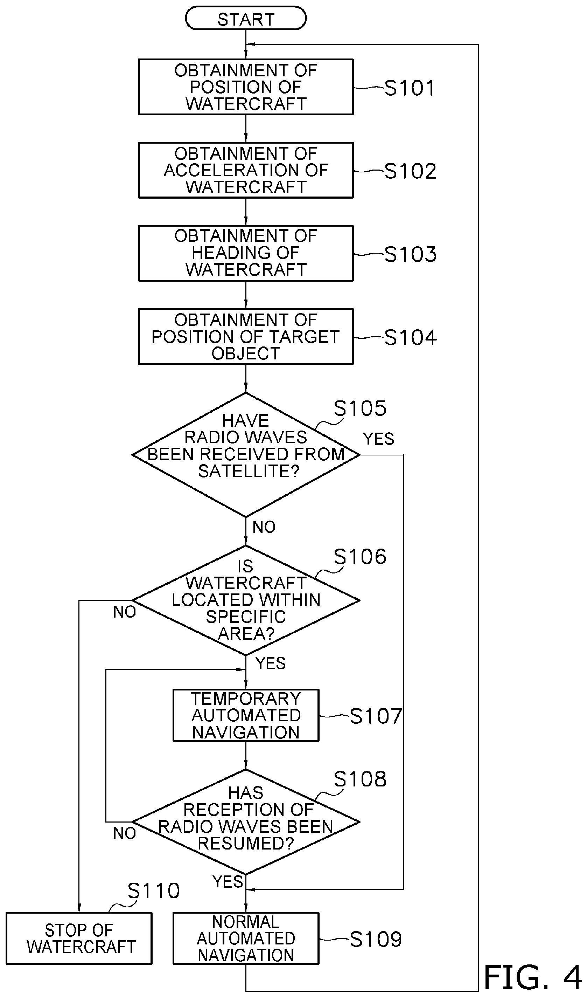

Next, the automated navigation control executed for the watercraft 101 by the controller 10 will be explained. FIG. 4 is a flowchart showing a series of processing of the automated navigation control executed for the watercraft 101 by the controller 10. As shown in FIG. 4, in step S101, the controller 10 obtains the position of the watercraft 101. The controller 10 obtains the position of the watercraft 101 based on a signal transmitted thereto from the satellite positioning sensor 11.

In step S102, the controller 10 obtains the acceleration of the watercraft 101. The controller 10 obtains the acceleration of the watercraft 101 based on a signal transmitted thereto from the acceleration sensor 13. In step S103, the controller 10 obtains the heading of the watercraft 101. The controller 10 obtains the heading of the watercraft 101 based on a signal transmitted thereto from the compass sensor 12.

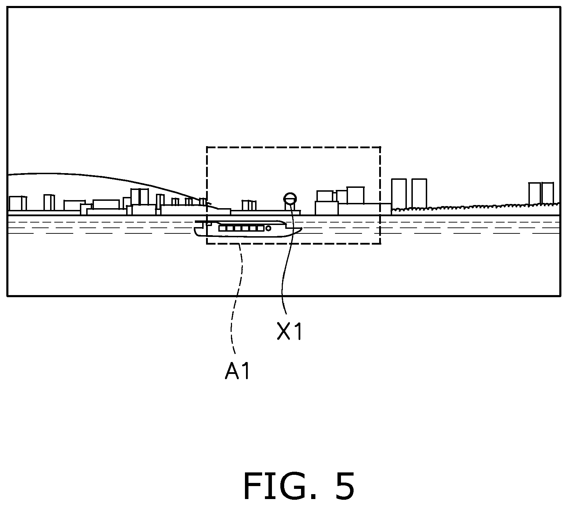

In step S104, the controller 10 obtains the position of a target object. The controller 10 obtains the position of the target object located at a predetermined distance ahead of the watercraft 101 in the moving direction of the watercraft 101 based on a signal transmitted thereto from the remote sensor 14. FIG. 5 is a diagram exemplifying an image detected in the moving direction of the watercraft 101 by the remote sensor 14. The controller 10 conducts image analysis to detect an object standing still within a predetermined angle of view A1 of the camera as a target object X1.

The target object may be, for instance, a building on the ground. Alternatively, the target object may be a structure on the water surface. When a plurality of objects are detected, the controller 10 determines the one closest to the center of the angle of view A1 among the objects as the target object in priority to the others. During navigation of the watercraft 101, the controller 10 continuously detects an object located in the moving direction of the watercraft 101 as the target object and updates the position of the target object. Therefore, the target object is not constant; the controller 10 changes the target obj ect in accordance with the movement of the watercraft 101.

In step S105, the controller 10 determines whether or not the satellite positioning sensor 11 is receiving the radio waves from the satellite. When the satellite positioning sensor 11 is receiving the radio waves from the satellite, the processing proceeds to step S109. In step S109, the controller 10 controls the watercraft 101 by normal automated navigation. In the normal automated navigation, the controller 10 causes the watercraft 101 to move along the navigation route R1, R2 based on the position of the watercraft 101 detected by the satellite positioning sensor 11.

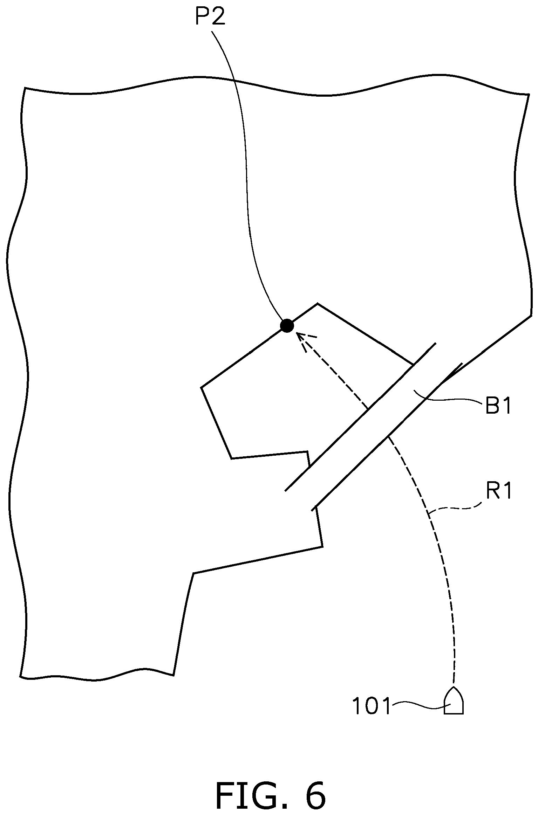

When the controller 10 determines that the satellite positioning sensor 11 is not receiving the radio waves from the satellite in step S105, the processing proceeds to step S106. In step S106, the controller 10 determines whether or not the watercraft 101 is located within a specific area. The controller 10 has stored, as the specific area, an area in which the radio waves transmitted from the satellite are unreceivable. For example, as shown in FIG. 6, chances are that the watercraft 101 passes under a bridge B1. The area under the bridge B1 is such an area that the radio waves transmitted from the satellite are unlikely to be receivable. Because of this, the controller 10 has stored the area under the bridge B1 as the specific area. When the controller 10 determines that the watercraft 101 is located within the specific area, the processing proceeds to step S107.

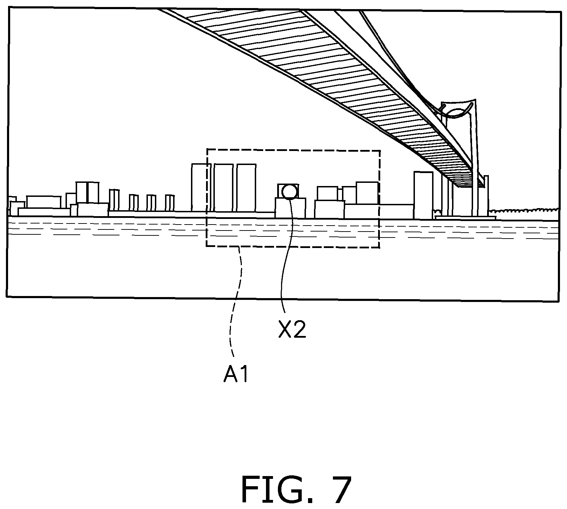

In step S107, the controller 10 controls the watercraft 101 by temporary automated navigation. In the temporary automated navigation, the controller 10 controls the watercraft 101 to move toward the target object. In other words, when the satellite positioning sensor 11 is interrupted from receiving the radio waves transmitted from the satellite, the controller 10 controls the watercraft 101 to move toward the target object set immediately before the interruption of receiving the radio waves. For example, as shown in FIG. 7, if the satellite positioning sensor 11 is interrupted from receiving the radio waves transmitted from the satellite when the watercraft 101 passes under the bridge, the controller 10 controls the watercraft 101 to move toward a target object X2 set immediately before the interruption of receiving the radio waves.

While the watercraft 101 is controlled by the temporary automated navigation, the controller 10 cannot obtain the position of the watercraft 101 by the satellite positioning sensor 11. Because of this, while the watercraft 101 is controlled by the temporary automated navigation, the controller 10 estimates the position of the watercraft 101 based on the heading of the watercraft 101 detected by the compass sensor 12 and the acceleration of the watercraft 101 detected by the acceleration sensor 13. The controller 10 controls the watercraft 101 to move toward the target object X2 based on the estimated position of the watercraft 101.

In step S108, the controller 10 determines whether or not the satellite positioning sensor 11 has resumed receiving the radio waves transmitted from the satellite. When the satellite positioning sensor 11 has not resumed receiving the radio waves transmitted from the satellite, the controller 10 continues the temporary automated navigation in step S107. When the satellite positioning sensor 11 has resumed receiving the radio waves transmitted from the satellite, the controller 10 restores the watercraft 101 to be controlled by the normal automated navigation in step S109. While the watercraft 101 is controlled by the automated navigation, the controller 10 repeatedly executes the series of processing from the steps S101 to S110 described above.

It should be noted that, when the satellite positioning sensor 11 is not receiving the radio waves transmitted from the satellite even though the watercraft 101 is not located within the specific area, the controller 10 stops the watercraft 101 in step S110. When the watercraft 101 is stopped, the controller 10 may inform the remote controller 20 of an alert. Accordingly, in the management center, the operator may remotely control the watercraft 101 through the remote controller 20.

In the system 100 according to the present embodiment explained above, when the satellite positioning sensor 11 is interrupted from receiving the radio waves transmitted from the satellite, the watercraft 101 is controlled to move toward the target object detected by the remote sensor 14. Accordingly, even when the satellite positioning sensor 11 is temporarily interrupted from receiving the radio waves transmitted from the satellite, the automated navigation can be continued for the watercraft 101.

Each marine propulsion device is not limited to the outboard motor and may be changed. For example, each marine propulsion device may be an inboard engine outboard drive or alternatively a jet propulsion device. The number of marine propulsion devices is not limited to two. The number of marine propulsion devices may be one. Alternatively, the number of marine propulsion devices may be greater than two. The remote sensor 14 is not limited to the camera and may be another type of sensor such as a laser or radar.

The series of processing for the automated navigation control is not limited to that described above and may be changed. For example, the controller 10 may count a duration from interruption to resumption of receiving the radio waves transmitted from the satellite by the satellite positioning sensor 11. When the duration has become a threshold or greater, the controller 10 may stop the watercraft 101. The controller 10 may stop the watercraft 101 when the watercraft 101 has reached a location short of the target object by a predetermined distance until the satellite positioning sensor 11 resumes receiving the radio waves transmitted from the satellite after the satellite positioning sensor 11 has been interrupted from receiving the radio waves transmitted from the satellite.

### REFERENCE SIGNS LIST

10: Controller, 11: Satellite positioning sensor, 14: Remote sensor

## Claims

1. A system for controlling a watercraft (101), the system comprising:
a satellite positioning sensor (11) to be installed in the watercraft (101), the satellite positioning sensor (11) being configured to detect a position of the watercraft (101) based on radio waves transmitted from a satellite of a satellite positioning system;
a remote sensor (14) to be installed in the watercraft (101), the remote sensor (14) being configured to detect a position of a target object (X2) with respect to the watercraft (101), the target object (X2) located in a moving direction of the watercraft (101); and
a controller (10) configured
to obtain the position of the watercraft (101) detected by the satellite positioning sensor (11); and
to execute normal automated navigation based on the position of the watercraft (101) such that the watercraft (101) is moved along a predetermined navigation route (R1, R2) when the satellite positioning sensor (11) is receiving the radio waves transmitted from the satellite;
**characterized in that** the controller (10) is further configured
to obtain the position of the target object (X2) detected by the remote sensor (14) during navigation of the watercraft (101); and
to execute temporary automated navigation such that the watercraft (101) is controlled to move toward the target object (X2) when the satellite positioning sensor (14) is interrupted from receiving the radio waves transmitted from the satellite.

2. The system according to claim 1, wherein while the satellite positioning sensor (11) is receiving the radio waves transmitted from the satellite, the controller (10) is configured to continuously detect a position of an object located at a predetermined distance ahead of the watercraft (101) in the moving direction of the watercraft (101) and to update the continuously detected position of the object as the position of the target object (X2).

3. The system according to claim 1 or 2, wherein
the controller (10) is configured
to determine whether or not the satellite positioning sensor (11) has resumed receiving the radio waves transmitted from the satellite; and
to restore the watercraft (101) to be controlled by the normal automated navigation when the satellite positioning sensor (11) has resumed receiving the radio waves transmitted from the satellite.

4. The system according to any of claims 1 to 3, wherein
the controller (10) is configured
to count a duration from interruption to resuming of receiving the radio waves transmitted from the satellite by the satellite positioning sensor (11); and
to stop the watercraft (101) when the duration has become a threshold or greater.

5. The system according to any of claims 1 to 4, wherein
the controller (10) is configured to stop the watercraft (101) when the watercraft (101) has reached a location short of the target object (X2) by a predetermined distance until the satellite positioning sensor (11) resumes receiving the radio waves transmitted from the satellite after the satellite positioning sensor (11) has been interrupted from receiving the radio waves transmitted from the satellite.

6. The system according to any of claims 1 to 5, wherein
the controller (10) is configured
to store an area in which the radio waves transmitted from the satellite are unreceivable; and
to execute the temporary automated navigation when the watercraft (101) has entered the area.

7. The system according to any of claims 1 to 6, wherein the watercraft (101) is configured to navigate unmanned and automatically.

8. A method of controlling a watercraft (101), the watercraft (101) including a satellite positioning sensor (11) and a remote sensor (14), the satellite positioning sensor (11) configured to detect a position of the watercraft (101) based on radio waves transmitted from a satellite of a satellite positioning system, the remote sensor (14) configured to detect a position of a target object (X2) with respect to the watercraft (101), the target object (X2) located in a moving direction of the watercraft (101), the method comprising:
obtaining (S101) the position of the watercraft (101) detected by the satellite positioning sensor (11); and
executing (S109) normal automated navigation based on the position of the watercraft (101) detected by the satellite positioning sensor (11) such that the watercraft (11) is moved along a predetermined navigation route (R1, R2) when the satellite positioning sensor (11) is receiving the radio waves transmitted from the satellite;
the method **characterized by** further comprising
obtaining (S104) the position of the target object (X2) detected by the remote sensor (14) during navigation of the watercraft (101); and
executing (S107) temporary automated navigation such that the watercraft (101) is controlled to move toward the target object (X2) when the satellite positioning sensor (11) is interrupted from receiving the radio waves transmitted from the satellite.

9. The method according to claim 8, further comprising:
continuously detecting a position of an object located at a predetermined distance ahead of the watercraft (101) in a moving direction of the watercraft (101); and
updating the continuously detected position of the object as the position of the target object (X2) while the satellite positioning sensor (11) is receiving the radio waves transmitted from the satellite.

10. The method according to claim 8 or 9, further comprising:
determining (S108) whether or not the satellite positioning sensor (11) has resumed receiving the radio waves transmitted from the satellite; and
restoring the watercraft (101) to be controlled by the normal automated navigation when the satellite positioning sensor (11) has resumed receiving the radio waves transmitted from the satellite.

11. The method according to any of claims 8 to 10, further comprising:
counting a duration from interruption to resuming of receiving the radio waves transmitted from the satellite by the satellite positioning sensor (11); and
stopping the watercraft (101) when the duration has become a threshold or greater.

12. The method according to any of claims 8 to 11, further comprising:
stopping the watercraft (101) when the watercraft has reached a location short of the target object (X2) by a predetermined distance until the satellite positioning sensor (11) resumes receiving the radio waves transmitted from the satellite after the satellite positioning sensor (11) has been interrupted from receiving the radio waves transmitted from the satellite.

13. The method according to any of claims 8 to 12, further comprising:
determining (S106) whether or not the watercraft (101) has entered an area in which the radio waves transmitted from the satellite are unreceivable; and
executing the temporary automated navigation (S107) when the watercraft (101) has entered the area.

14. The method according to any of claims 8 to 13, wherein the watercraft (101) is configured to navigate unmanned and automatically.

## Patentansprüche

1. System zur Steuerung eines Wasserfahrzeugs (101), wobei das System umfasst:
einen Satellitenpositionierungssensor (11), der in dem Wasserfahrzeug (101) zu installieren ist, wobei der Satellitenpositionierungssensor (11) dazu eingerichtet ist, eine Position des Wasserfahrzeugs (101) auf Grundlage von Funkwellen zu erfassen, die von einem Satelliten eines Satellitenpositionierungssystems übertragen werden;
einen Fernsensor (14), der in dem Wasserfahrzeug (101) zu installieren ist, wobei der Fernsensor (14) dazu eingerichtet ist, eine Position eines Zielobjekts (X2) in Bezug auf das Wasserfahrzeug (101) zu erfassen, wobei sich das Zielobjekt (X2) in einer Bewegungsrichtung des Wasserfahrzeugs (101) befindet; und
ein Steuergerät (10), das dazu eingerichtet ist,
die von dem Satellitenpositionierungssensor (11) erfasste Position des Wasserfahrzeugs (101) zu erhalten; und
auf Grundlage der Position des Wasserfahrzeugs (101) eine normale automatisierte Navigation derart auszuführen, dass das Wasserfahrzeug (101) entlang einer vorbestimmten Navigationsroute (R1, R2) bewegt wird, wenn der Satellitenpositionierungssensor (11) die von dem Satelliten übertragenen Funkwellen empfängt;
**dadurch gekennzeichnet, dass** das Steuergerät (10) ferner dazu eingerichtet ist,
die von dem Fernsensor (14) erfasste Position des Zielobjekts (X2) während der Navigation des Wasserfahrzeugs (101) zu erhalten; und
eine vorübergehende automatisierte Navigation derart auszuführen, dass das Wasserfahrzeug (101) so gesteuert wird, dass es sich auf das Zielobjekt (X2) zubewegt, wenn der Satellitenpositionierungssensor (14) beim Empfang der von dem Satelliten übertragenen Funkwellen unterbrochen wird.

2. System nach Anspruch 1, wobei, während der Satellitenpositionierungssensor (11) die von dem Satelliten übertragenen Funkwellen empfängt, das Steuergerät (10) dazu eingerichtet ist, kontinuierlich eine Position eines Objekts zu erfassen, das sich in der Bewegungsrichtung des Wasserfahrzeugs (101) in einem vorbestimmten Abstand vor dem Wasserfahrzeug (101) befindet, und die kontinuierlich erfasste Position des Objekts als die Position des Zielobjekts (X2) zu aktualisieren.

3. System nach Anspruch 1 oder 2, wobei
das Steuergerät (10) dazu eingerichtet ist,
zu bestimmen, ob der Satellitenpositionierungssensor (11) den Empfang der von dem Satelliten übertragenen Funkwellen wieder aufgenommen hat; und
die Steuerung des Wasserfahrzeugs (101) durch die normale automatisierte Navigation wiederherzustellen, wenn der Satellitenpositionierungssensor (11) den Empfang der von dem Satelliten übertragenen Funkwellen wieder aufgenommen hat.

4. System nach einem der Ansprüche 1 bis 3, wobei
das Steuergerät (10) dazu eingerichtet ist,
eine Zeitdauer von der Unterbrechung bis zur Wiederaufnahme des Empfangs der von dem Satelliten übertragenen Funkwellen durch den Satellitenpositionierungssensor (11) zu erfassen; und
das Wasserfahrzeug (101) zu stoppen, wenn die Zeitdauer einen Schwellenwert erreicht hat oder größer ist.

5. System nach einem der Ansprüche 1 bis 4, wobei
das Steuergerät (10) dazu eingerichtet ist, das Wasserfahrzeug (101) zu stoppen, wenn das Wasserfahrzeug (101) eine Position erreicht hat, die um einen vorbestimmten Abstand vor dem Zielobjekt (X2) liegt, bis der Satellitenpositionierungssensor (11) den Empfang der von dem Satelliten übertragenen Funkwellen wieder aufnimmt, nachdem der Satellitenpositionierungssensor (11) beim Empfang der von dem Satelliten übertragenen Funkwellen unterbrochen worden ist.

6. System nach einem der Ansprüche 1 bis 5, wobei
das Steuergerät (10) dazu eingerichtet ist,
einen Bereich zu speichern, in dem die von dem Satelliten übertragenen Funkwellen nicht empfangbar sind; und
die vorübergehende automatisierte Navigation auszuführen, wenn das Wasserfahrzeug (101) in den Bereich eingetreten ist.

7. System nach einem der Ansprüche 1 bis 6, wobei das Wasserfahrzeug (101) dazu eingerichtet ist, unbemannt und automatisch zu navigieren.

8. Verfahren zur Steuerung eines Wasserfahrzeugs (101), wobei das Wasserfahrzeug (101) einen Satellitenpositionierungssensor (11) und einen Fernsensor (14) umfasst, wobei der Satellitenpositionierungssensor (11) dazu eingerichtet ist, eine Position des Wasserfahrzeugs (101) auf Grundlage von Funkwellen zu erfassen, die von einem Satelliten eines Satellitenpositionierungssystems übertragen werden, wobei der Fernsensor (14) dazu eingerichtet ist, eine Position eines Zielobjekts (X2) in Bezug auf das Wasserfahrzeug (101) zu erfassen, wobei sich das Zielobjekt (X2) in einer Bewegungsrichtung des Wasserfahrzeugs (101) befindet, wobei das Verfahren umfasst:
Erhalten (S101) der von dem Satellitenpositionierungssensor (11) erfassten Position des Wasserfahrzeugs (101); und
Ausführen (S109) einer normalen automatisierten Navigation auf Grundlage der von dem Satellitenpositionierungssensor (11) erfassten Position des Wasserfahrzeugs (101) derart, dass das Wasserfahrzeug (11) entlang einer vorbestimmten Navigationsroute (R1, R2) bewegt wird, wenn der Satellitenpositionierungssensor (11) die von dem Satelliten übertragenen Funkwellen empfängt;
wobei das Verfahren **dadurch gekennzeichnet ist, dass** es ferner umfasst:
Erhalten (S104) der von dem Fernsensor (14) erfassten Position des Zielobjekts (X2) während der Navigation des Wasserfahrzeugs (101); und
Ausführen (S107) einer vorübergehenden automatisierten Navigation derart, dass das Wasserfahrzeug (101) so gesteuert wird, dass es sich auf das Zielobjekt (X2) zubewegt, wenn der Satellitenpositionierungssensor (11) beim Empfang der von dem Satelliten übertragenen Funkwellen unterbrochen wird.

9. Verfahren nach Anspruch 8, ferner umfassend:
kontinuierliches Erfassen einer Position eines Objekts, das sich in einer Bewegungsrichtung des Wasserfahrzeugs (101) in einem vorbestimmten Abstand vor dem Wasserfahrzeug (101) befindet; und
Aktualisieren der kontinuierlich erfassten Position des Objekts als die Position des Zielobjekts (X2), während der Satellitenpositionierungssensor (11) die von dem Satelliten übertragenen Funkwellen empfängt.

10. Verfahren nach Anspruch 8 oder 9, ferner umfassend:
Bestimmen (S108), ob der Satellitenpositionierungssensor (11) den Empfang der von dem Satelliten übertragenen Funkwellen wieder aufgenommen hat; und
Wiederherstellen der Steuerung des Wasserfahrzeugs (101) durch die normale automatisierte Navigation, wenn der Satellitenpositionierungssensor (11) den Empfang der von dem Satelliten übertragenen Funkwellen wieder aufgenommen hat.

11. Verfahren nach einem der Ansprüche 8 bis 10, ferner umfassend:
Erfassen einer Zeitdauer von der Unterbrechung bis zur Wiederaufnahme des Empfangs der von dem Satelliten übertragenen Funkwellen durch den Satellitenpositionierungssensor (11); und
Stoppen des Wasserfahrzeugs (101), wenn die Zeitdauer einen Schwellenwert erreicht hat oder größer ist.

12. Verfahren nach einem der Ansprüche 8 bis 11, ferner umfassend:
Stoppen des Wasserfahrzeugs (101), wenn das Wasserfahrzeug eine Position erreicht hat, die um einen vorbestimmten Abstand vor dem Zielobjekt (X2) liegt, bis der Satellitenpositionierungssensor (11) den Empfang der von dem Satelliten übertragenen Funkwellen wieder aufnimmt, nachdem der Satellitenpositionierungssensor (11) beim Empfang der von dem Satelliten übertragenen Funkwellen unterbrochen worden ist.

13. Verfahren nach einem der Ansprüche 8 bis 12, ferner umfassend:
Bestimmen (S106), ob das Wasserfahrzeug (101) in einen Bereich eingetreten ist, in dem die von dem Satelliten übertragenen Funkwellen nicht empfangbar sind; und
Ausführen der vorübergehenden automatisierten Navigation (S107), wenn das Wasserfahrzeug (101) in den Bereich eingetreten ist.

14. Verfahren nach einem der Ansprüche 8 bis 13, wobei das Wasserfahrzeug (101) dazu eingerichtet ist, unbemannt und automatisch zu navigieren.

## Revendications

1. Système de commande d'une embarcation (101), le système comprenant :
un capteur de positionnement par satellite (11) destiné à être installé dans l'embarcation (101), le capteur de positionnement par satellite (11) étant configuré pour détecter une position de l'embarcation (101) sur la base d'ondes radio transmises par un satellite d'un système de positionnement par satellite ;
un capteur à distance (14) destiné à être installé dans l'embarcation (101), le capteur à distance (14) étant configuré pour détecter une position d'un objet cible (X2) par rapport à l'embarcation (101), l'objet cible (X2) étant situé dans une direction de déplacement de l'embarcation (101) ; et
un dispositif de commande (10) configuré pour
obtenir la position de l'embarcation (101) détectée par le capteur de positionnement par satellite (11) ; et
exécuter une navigation automatisée normale sur la base de la position de l'embarcation (101), de telle sorte que l'embarcation (101) soit déplacée le long d'un itinéraire de navigation prédéterminé (R1, R2) lorsque le capteur de positionnement par satellite (11) reçoit les ondes radio transmises par le satellite ;
**caractérisé en ce que** le dispositif de commande (10) est en outre configuré pour
obtenir la position de l'objet cible (X2) détectée par le capteur à distance (14) pendant la navigation de l'embarcation (101) ; et
exécuter une navigation automatisée temporaire de telle sorte que l'embarcation (101) soit commandée pour se déplacer vers l'objet cible (X2) lorsque le capteur de positionnement par satellite (14) est interrompu dans la réception des ondes radio transmises par le satellite.

2. Système selon la revendication 1, dans lequel, pendant que le capteur de positionnement par satellite (11) reçoit les ondes radio transmises par le satellite, le dispositif de commande (10) est configuré pour détecter en continu une position d'un objet situé à une distance prédéterminée en avant de l'embarcation (101) dans la direction de déplacement de l'embarcation (101), et pour mettre à jour la position détectée en continu de l'objet en tant que position de l'objet cible (X2).

3. Système selon la revendication 1 ou 2, dans lequel
le dispositif de commande (10) est configuré pour
déterminer si le capteur de positionnement par satellite (11) a repris la réception des ondes radio transmises par le satellite ; et
rétablir la commande de l'embarcation (101) par la navigation automatisée normale lorsque le capteur de positionnement par satellite (11) a repris la réception des ondes radio transmises par le satellite.

4. Système selon l'une quelconque des revendications 1 à 3, dans lequel
le dispositif de commande (10) est configuré pour
mesurer une durée allant de l'interruption à la reprise de la réception des ondes radio transmises par le satellite par le capteur de positionnement par satellite (11) ; et
arrêter l'embarcation (101) lorsque la durée a atteint un seuil ou est supérieure à celui-ci.

5. Système selon l'une quelconque des revendications 1 à 4, dans lequel
le dispositif de commande (10) est configuré pour arrêter l'embarcation (101) lorsque l'embarcation (101) a atteint une position située à une distance prédéterminée avant l'objet cible (X2), jusqu'à ce que le capteur de positionnement par satellite (11) reprenne la réception des ondes radio transmises par le satellite après que le capteur de positionnement par satellite (11) a été interrompu dans la réception des ondes radio transmises par le satellite.

6. Système selon l'une quelconque des revendications 1 à 5, dans lequel
le dispositif de commande (10) est configuré pour
mémoriser une zone dans laquelle les ondes radio transmises par le satellite ne peuvent pas être reçues ; et
exécuter la navigation automatisée temporaire lorsque l'embarcation (101) est entrée dans la zone.

7. Système selon l'une quelconque des revendications 1 à 6, dans lequel l'embarcation (101) est configurée pour naviguer sans équipage et automatiquement.

8. Procédé de commande d'une embarcation (101), l'embarcation (101) comprenant un capteur de positionnement par satellite (11) et un capteur à distance (14), le capteur de positionnement par satellite (11) étant configuré pour détecter une position de l'embarcation (101) sur la base d'ondes radio transmises par un satellite d'un système de positionnement par satellite, le capteur à distance (14) étant configuré pour détecter une position d'un objet cible (X2) par rapport à l'embarcation (101), l'objet cible (X2) étant situé dans une direction de déplacement de l'embarcation (101), le procédé comprenant :
l'obtention (S101) de la position de l'embarcation (101) détectée par le capteur de positionnement par satellite (11) ; et
l'exécution (S109) d'une navigation automatisée normale sur la base de la position de l'embarcation (101) détectée par le capteur de positionnement par satellite (11), de telle sorte que l'embarcation (11) soit déplacée le long d'un itinéraire de navigation prédéterminé (R1, R2) lorsque le capteur de positionnement par satellite (11) reçoit les ondes radio transmises par le satellite ;
le procédé étant **caractérisé en ce qu'**il comprend en outre :
l'obtention (S104) de la position de l'objet cible (X2) détectée par le capteur à distance (14) pendant la navigation de l'embarcation (101) ; et
l'exécution (S107) d'une navigation automatisée temporaire de telle sorte que l'embarcation (101) soit commandée pour se déplacer vers l'objet cible (X2) lorsque le capteur de positionnement par satellite (11) est interrompu dans la réception des ondes radio transmises par le satellite.

9. Procédé selon la revendication 8, comprenant en outre :
la détection en continu d'une position d'un objet situé à une distance prédéterminée en avant de l'embarcation (101) dans une direction de déplacement de l'embarcation (101); et
la mise à jour de la position détectée en continu de l'objet en tant que position de l'objet cible (X2) pendant que le capteur de positionnement par satellite (11) reçoit les ondes radio transmises par le satellite.

10. Procédé selon la revendication 8 ou 9, comprenant en outre :
la détermination (S108) de la question de savoir si le capteur de positionnement par satellite (11) a repris la réception des ondes radio transmises par le satellite ; et
le rétablissement de la commande de l'embarcation (101) par la navigation automatisée normale lorsque le capteur de positionnement par satellite (11) a repris la réception des ondes radio transmises par le satellite.

11. Procédé selon l'une quelconque des revendications 8 à 10, comprenant en outre :
la mesure d'une durée allant de l'interruption à la reprise de la réception des ondes radio transmises par le satellite par le capteur de positionnement par satellite (11) ; et
l'arrêt de l'embarcation (101) lorsque la durée a atteint un seuil ou est supérieure à celui-ci.

12. Procédé selon l'une quelconque des revendications 8 à 11, comprenant en outre :
l'arrêt de l'embarcation (101) lorsque l'embarcation a atteint une position située à une distance prédéterminée avant l'objet cible (X2), jusqu'à ce que le capteur de positionnement par satellite (11) reprenne la réception des ondes radio transmises par le satellite après que le capteur de positionnement par satellite (11) a été interrompu dans la réception des ondes radio transmises par le satellite.

13. Procédé selon l'une quelconque des revendications 8 à 12, comprenant en outre :
la détermination (S106) de la question de savoir si l'embarcation (101) est entrée dans une zone dans laquelle les ondes radio transmises par le satellite ne peuvent pas être reçues ; et
l'exécution de la navigation automatisée temporaire (S107) lorsque l'embarcation (101) est entrée dans la zone.

14. Procédé selon l'une quelconque des revendications 8 à 13, dans lequel l'embarcation (101) est configurée pour naviguer sans équipage et automatiquement.
